# EUROPÄISCHE PATENTANMELDUNG

(11) **EP 3 231 563 A1**
(43) Veröffentlichungstag der Anmeldung: **18.10.2017**
(21) Anmeldenummer: 16165300.1
(22) Anmeldetag: 14.04.2016
(51) Int. Cl.: B26B 17/02

(54) **BOLZENSCHNEIDER**

(71) Anmelder: Wezag GmbH Werkzeugfabrik, 35260 Stadtallendorf (DE)
(72) Erfinder: Zinser, Roman, 35279 Neustadt (DE)
(74) Vertreter: REHBERG HÜPPE + PARTNER

(57) **Zusammenfassung**

Die Erfindung betrifft einen Bolzenschneider (1), der zum Durchtrennen eines insbesondere bolzenartigen Werkstücks verwendet werden kann. Der Bolzenschneider weist einen festen Handhebel (3) und beweglichen Handhebel (2) auf. Eine Schneidbacke (8) ist starr mit dem festen Handhebel (3) verbunden. Der bewegliche Handhebel (2) ist über ein Ratschengetriebe (7) mit einer beweglichen Schneidbacke (6) gekoppelt.

In einer Öffnungsstellung der Schneidbacken (6, 8) liegt die bewegliche Schneidbacke (6) an einem durch eine Abstützfeder (54) abgestützten Anschlag (55) an. Durch manuelle Aufbringung einer Öffnungskraft kann die bewegliche Schneidbacke (6) von der genannten Öffnungsstellung unter Beaufschlagung der Abstützfeder (54) in eine erweiterte Öffnungsstellung bewegt werden. Entfällt die manuell aufgebrachte Öffnungskraft, kehrt die bewegliche Schneidbacke (6) infolge der Abstützfeder (54) automatisch von der erweiterten Öffnungsstellung in die Öffnungsstellung zurück.

## Beschreibung

### TECHNISCHES GEBIET DER ERFINDUNG

Die Erfindung betrifft einen Bolzenschneider, welcher ein Durchtrennen eines Werkstücks, insbesondere eines Drahts, eines Drahtseils, eines Kabels, eines Bolzens u. ä. ermöglicht.

### STAND DER TECHNIK

Aus der Druckschrift DE 298 01 199 U1 ist ein Seitenschneider bekannt. Ein Grundkörper, der aus zwei Halbschalen besteht, bildet sowohl einen festen Handhebel als auch eine feste Schneidbacke aus. Zwischen den beiden Halbschalen ist an dem Grundkörper über einen Schwenkbolzen eine Schneidbacke verschwenkbar gelagert. Diese verschwenkbare Schneidbacke weist auf der hinsichtlich des Schwenklagers von der Schneide abgewandten Seite eine Ratschenverzahnung auf. An dem Grundkörper ist über ein weiteres Schwenklager ein beweglicher Handhebel verschwenkbar gelagert. An dem beweglichen Handhebel ist wiederum verschwenkbar eine Schubstange gelagert. Die Schubstange wird über eine Feder in Eingriff mit der Ratschenverzahnung der beweglichen Schneidbacke gebracht, womit ein Ratschengetriebe gebildet ist, über welches durch manuelle Betätigung der Handhebel eine Schließung der Schneidbacken herbeigeführt werden kann. Eine einmal erreichte Schließstellung der Schneidbacken ist bei Entlastung oder Öffnung der Handhebel gesichert durch eine in die Ratschenverzahnung der beweglichen Schneidbacke eingreifende Sperrklinke, welche durch einen seitlich aus dem Kopf des Seitenschneiders herausragenden Entsperrhebel manuell entsperrt werden kann. Eine Zugfeder beaufschlagt die bewegliche Schneidbacke in Öffnungsrichtung. Nach dem vollständigem Durchlaufen des Schneidhubs oder manuellem Entsperren der Sperrklinke wird die bewegliche Schneidbacke durch die Zugfeder automatisch in Öffnungsrichtung bewegt. Mit dem Erreichen einer Öffnungsstellung kommt die Schneidbacke infolge der Beaufschlagung durch die Zugfeder zur Anlage an einen an dem Grundkörper abgestützten Anschlag.

### AUFGABE DER ERFINDUNG

Der Erfindung liegt die Aufgabe zugrunde, einen Bolzenschneider vorzuschlagen, welcher hinsichtlich der Bedienung, insbesondere für das Einlegen eines Werkstücks in eine von Schneidmessern gebildete Aufnahme, verbessert ist.

### LÖSUNG

Die Aufgabe der Erfindung wird erfindungsgemäß mit den Merkmalen des unabhängigen Patentanspruchs 1 gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft zunächst einen besonderen Typ einer Zange, nämlich einen Bolzenschneider, der zum Durchtrennen eines Werkstücks dient. Bei dem Bolzenschneider finden vorzugsweise nicht sichelförmige Schneiden Einsatz, wie diese für so genannte Kabelschneider Einsatz finden und welche während des Schneidhubs aneinander vorbeigeführt werden. Vielmehr können bspw. geradlinige Schneiden Einsatz finden, die über den Schneidhub ein V mit sich veränderndem Öffnungswinkel bilden, Einsatz finden. Vorzugsweise liegend die beiden Schneiden am Ende des Schneidhubs nach dem Durchtrennen des Werkstücks in der derselben Ebene aneinander an. Die Erfindung umfasst dabei sowohl Ausführungsformen, bei denen das Einschneiden und Durchtrennen des Werkstücks durch beide Schneiden erfolgt, als auch Ausführungsformen, bei welchen eine Schneide vorrangig das Werkstück abstützt, während die andere Schneide vorrangig das Werkstück durchtrennt, wobei in diesem Fall die erstgenannte Schneide stumpf ausgebildet sein kann. Für den erfindungsgemäßen Bolzenschneider werden die beiden Schneidbacken "scherenartig" bewegt, wozu die bewegliche Schneidbacke über ein Schwenklager verschwenkbar gegenüber der festen Schneidbacke gelagert ist.

Des Weiteren findet erfindungsgemäß kein Bolzenschneider Einsatz, bei welchem (entsprechend einer Schere) der bewegliche Handhebel und die bewegliche Schneidbacke starr miteinander verbunden sind oder diese ausschließlich über einen einfachen Kniehebeltrieb miteinander verbunden sind. Vielmehr ist die bewegliche Schneidbacke über ein Ratschengetriebe von dem beweglichen Handhebel angetrieben (wobei hier durchaus zusätzlich ein Kniehebeltrieb Einsatz finden kann). Das Ratschengetriebe ermöglicht eine Aufteilung des Schneidhubs der Schneidbacken in einzelne Teilhübe, wobei in jedem Teilhub des Schneidhubs der Schneidbacken ein vollständiger Schließhub der Handhebel von einer Öffnungsstellung der Handhebel in eine Schließstellung der Handhebel herbeigeführt wird, während zwischen den einzelnen Teilhüben die Handhebel wieder in die Öffnungsstellung zurückgeführt werden. Dies hat zur Folge, dass über den gesamten Schneidhub der Schneidbacken die Handhebel einen kumulierten Schließhub durchlaufen, welcher sich ungefähr aus dem Produkt der Zahl der Schließhübe bzw. der Teilhübe des Schneidhubs einerseits und dem Schließhub der Handhebel andererseits ergibt. Somit ermöglicht der Einsatz des Ratschengetriebes eine große Kraftübersetzung, was zur Folge hat, dass für verhältnismäßig kurze Handhebel und somit eine kompakte Bauweise große Schneidkräfte erzeugt werden können.

Erfindungsgemäß wird für einen derartigen Bolzenschneider vorgeschlagen, dass die Öffnungsstellung (abweichend zu dem eingangs genannten Stand der Technik) nicht durch einen starren Anschlag vorgegeben ist, sondern vielmehr dadurch vorgegeben ist, dass die bewegliche Schneidbacke an einem durch eine Abstützfeder abgestützten Anschlag (der auch von der Stirnseite der Abstützfeder selbst gebildet sein kann) anliegt. Durch manuelle Aufbringung einer Öffnungskraft auf die bewegliche Schneidbacke kann diese von der Öffnungsstellung (mit einer Bewegung des Anschlags und einer Erhöhung der Beaufschlagung der Abstützfeder) in eine erweiterte Öffnungsstellung bewegt werden. Die erweiterte Öffnungsstellung kann dann genutzt werden, um das zu durchtrennende Werkstück in eine von Schneidmessern begrenzte Aufnahme des Bolzenschneiders einzuführen. Grundsätzlich könnte auch für einen herkömmlichen Bolzenschneider mit einem starren Anschlag zur Vorgabe der Öffnungsstellung der Anschlag so positioniert sein, dass sich eine der erfindungsgemäßen erweiterten Öffnungsstellung entsprechende weite Öffnung der Aufnahme ergibt. Dann wäre aber erforderlich, dass aus dieser sehr weiten Öffnung der Aufnahme mehrere Teilhübe des Schneidhubs durchlaufen werden müssten, bevor die Aufnahme für das Werkstück soweit geschlossen wäre, dass der eigentliche Schneidvorgang beginnen kann. Somit ist für den Bolzenschneider gemäß dem Stand der Technik der Zielkonflikt zu lösen, einerseits das Ausmaß der Öffnung der Aufnahme für das Werkstück in der Öffnungsstellung so gering zu halten wie möglich, um die Zahl der Teilhübe zu reduzieren, und andererseits die Öffnung der Aufnahme möglichst groß zu machen, um ein Einführen des Werkstücks zu ermöglichen oder möglichst einfach zu machen. Erfindungsgemäß wird vorgeschlagen, dass bei einer Reduzierung oder einem Entfall der manuell aufgebrachten Öffnungskraft die bewegliche Schneidbacke (automatisch) infolge der Abstützfeder von der erweiterten Öffnungsstellung in die Öffnungsstellung zurückgeführt wird, in welcher dann der Schneidhub beginnt, womit zusätzliche Schließhübe der Handhebel für die Herbeiführung der Öffnungsstellung erfindungsgemäß vermieden sind.

Vorzugsweise muss
- für die Bewegung der beweglichen Schneidbacke von der Öffnungsstellung in die erweiterte Öffnungsstellung durch manuelle Aufbringung einer Öffnungskraft und/oder
- für die automatische Rückbewegung der beweglichen Schneidbacke von der erweiterten Öffnungsstellung in die Öffnungsstellung durch die Abstützfeder
eine Sperrklinke des Ratschengetriebes und/oder eine Schubstange des Ratschengetriebes gelöst werden. Dieses Lösen der Sperrklinke und/oder der Schubstange kann manuell durch manuelle Betätigung mindestens eines Löseorgans wie eines Lösehebels erfolgen, der die Sperrklinke und/oder die Schubstange von der Ratschenverzahnung des Ratschengetriebes weg bewegt. Alternativ oder kumulativ möglich ist, dass ein Lösen der Sperrklinke und/oder der Schubstange dadurch erfolgt, dass die Handhebel in eine besondere Stellung wie eine erweiterte Öffnungsstellung überführt werden, in welcher ein Lösen der Sperrklinke und/oder der Schubstange erfolgt oder eine zuvor manuell herbeigeführte Lösestellung der Sperrklinke und/oder einer Schubstange aufrechterhalten wird. Vorzugsweise findet für das Lösen der Sperrklinke und der Schubstange und die Aufrechterhaltung der Lösestellung eine Ausgestaltung gemäß der nicht vorveröffentlichten europäischen Patentanmeldung EP 15 191 264.9 Einsatz, gemäß welcher die Handhebel während des Schneidhubs der Schneidbacken wiederholt zwischen einer Öffnungsstellung der Handhebel und einer Schließstellung der Handhebel bewegt werden, wobei die Schubstange und die Sperrklinke in Eingriff mit der Ratschenverzahnung der beweglichen Schneidbacke stehen, während die Handhebel in eine erweiterte Öffnungsstellung überführbar sind, in welcher die Schubstange und die Sperrklinke nicht in Eingriff mit der Ratschenverzahnung der beweglichen Schneidbacke stehen. Die diesbezügliche Offenbarung der nicht vorveröffentlichten Druckschrift EP 15 191 264.9 wird zum Gegenstand der vorliegenden Anmeldung gemacht. Möglich ist somit, dass zunächst von dem Benutzer entsprechend EP 15 191 264.9 die Handhebel in eine erweiterte Öffnungsstellung überführt werden, womit dann auch die Schneidbacken in die erweiterte Öffnungsstellung manuell bewegt werden können und nach dem Einlegen des Werkstücks in die Aufnahme die automatische Schließung durch die Abstützfeder erfolgen kann.

Für die Aufbringung der manuellen Öffnungskraft auf die bewegliche Schneidbacke gibt es vielfältige Möglichkeiten, welche eine unmittelbare und eine mittelbare Aufbringung der Öffnungskraft auf die bewegliche Schneidbacke umfassen. Für eine Ausgestaltung des Bolzenschneiders bilden die (integral von den Schneidbacken ausgebildeten oder hieran abgestützten) Schneidmesser eine Aufnahme für ein Werkstück. In der erweiterten Öffnungsstellung (und unter Umständen auch in der Öffnungsstellung) weist die Aufnahme eine Einführöffnung auf, über die in eine Einführrichtung das Werkstück in die Aufnahme einführbar ist.

Für eine erste Variante der manuellen Aufbringung der Öffnungskraft weist die bewegliche Schneidbacke eine Betätigungsfläche auf. Die Betätigungsfläche ist für diese Variante der Aufnahme in Einführrichtung vorgeordnet. Für ein Einführen des Werkstücks in die Aufnahme kann dann die manuelle Öffnungskraft vom Benutzer über das Werkstück auf die Betätigungsfläche der beweglichen Schneidbacke aufgebracht werden. Das Werkstück drückt somit über die Betätigungsfläche die bewegliche Schneidbacke von der Öffnungsstellung in die erweiterte Öffnungsstellung, womit die Einführöffnung geschaffen oder vergrößert wird und dann das Werkstück entlang der Betätigungsfläche in Einführrichtung in die Aufnahme gleiten kann. Ist das Werkstück in der Aufnahme angeordnet, können die Schneidbacken infolge der Wirkung der Abstützfeder unter zumindest teilweiser Schließung der Einführöffnung der Aufnahme wieder "zuschnappen".

Für eine zweite Variante (welche alternativ oder kumulativ zu der ersten Variante Einsatz finden kann) weist die bewegliche Schneidbacke ebenfalls eine Betätigungsfläche auf, über die eine manuelle Öffnungskraft aufgebracht werden kann. In diesem Fall ragt die Betätigungsfläche in der Öffnungsstellung lateral aus einem Kopf des Bolzenschneiders heraus, so dass diese von dem Benutzer unmittelbar gegriffen oder anderweitig betätigt werden kann. Durch Drücken auf die oder Ziehen an der Betätigungsfläche kann dann die bewegliche Schneidbacke vom Benutzer von der Öffnungsstellung in die erweiterte Öffnungsstellung bewegt werden.

Für die Ausbildung der Betätigungsfläche gibt es vielfältige Möglichkeiten. Für einen besonderen Vorschlag der Erfindung wird die Betätigungsfläche von einem Betätigungselement, insbesondere einem Haken, ausgebildet. Dieser kann in einem in der Öffnungsstellung aus dem Zangenkopf seitlich herausragenden äußeren Endbereich einer Ratschenverzahnung der beweglichen Schneidbacke, mit der das Ratschengetriebe gebildet ist, angeordnet sein.

Für einen weiteren Vorschlag der Erfindung weist zumindest eine Schneidbacke ein Sicherungselement auf. Das Sicherungselement verschließt eine in der Öffnungsstellung noch vorhandene Einführöffnung zu der Aufnahme für das Werkstück zumindest teilweise, um einen unbeabsichtigten Austritt des Werkstücks aus der Aufnahme nach dem Einlegen desselben in der erweiterten Öffnungsstellung zu vermeiden.

Für die Ausbildung des Sicherungselements gibt es vielfältige Möglichkeiten. So kann es sich hierbei bspw. um einen an der Schneidbacke gehaltenen Schieber, einen verschwenkbar an der Schneidbacke gehaltenen Schwenkbügel u. ä. handeln. Eine besonders einfache Ausgestaltung des Sicherungselements ist gegeben, wenn das Sicherungselement von einem Vorsprung oder Haken der Schneidbacke gebildet ist, der in Richtung der anderen Schneidbacke gegenüber der Schneide der Schneidbacke, an welcher das Sicherungselement ausgebildet ist, hervorsteht.

Für die Gestaltung und Dimensionierung der Öffnungsstellung, der erweiterten Öffnungsstellung und der Einführöffnung in der Öffnungsstellung und der erweiterten Öffnungsstellung gibt es vielfältige von der Erfindung umfasste Möglichkeiten. Für eine besondere Ausgestaltung der Erfindung weist die Einführöffnung in der Öffnungsstellung einen ersten Einführquerschnitt auf, während diese in der erweiterten Öffnungsstellung einen zweiten Einführquerschnitt aufweist. Für den Fall des Einsatzes des zuvor genannten Sicherungselements ist/sind zumindest der zweite Einführquerschnitt, vorzugsweise aber sowohl der erste Einführquerschnitt als auch der zweite Einführquerschnitt, durch das Sicherungselement begrenzt. Erfindungsgemäß wird der zweite Einführquerschnitt in der erweiterten Öffnungsstellung größer gewählt als der Querschnitt des bestimmungsgemäßen Werkstücks, so dass in der erweiterten Öffnungsstellung über den zweiten Einführquerschnitt das Einführen des bestimmungsgemäßen Werkstücks in die Aufnahme möglich ist. Hingegen ist der erste Einführquerschnitt in der Öffnungsstellung kleiner als der Querschnitt eines bestimmungsgemäßen Werkstücks. Somit kann das einmal in der erweiterten Öffnungsstellung in die Aufnahme eingeführte Werkstück nach der automatischen Rückkehr in die Öffnungsstellung nicht wieder aus der Aufnahme über den ersten Einführquerschnitt austreten.

Für den Fall, dass der Bolzenschneider für mehrere bestimmungsgemäße Werkstücke bestimmt ist, ist der zweite Einführquerschnitt in jedem Fall so groß gewählt, dass sämtliche Querschnitte der bestimmungsgemäßen Werkstücke durch die Einführöffnung hindurchtreten können. In diesem Fall kann der erste Einführquerschnitt lediglich kleiner sein als der Querschnitt des größten bestimmungsgemäßen Werkstücks. Vorzugsweise ist diese aber kleiner als der Querschnitt sämtlicher bestimmungsgemäßen Werkstücke.

Unter Umständen kann sich ein Zielkonflikt hinsichtlich der Dimensionierung der Öffnungsfeder ergeben: Einerseits kann eine steife Öffnungsfeder mit einer großen Öffnungskraft gewünscht sein, um die bewegliche Schneidbacke (u. U. auch unter Überwindung der Ratschenwirkung des Ratschengetriebes, einer etwaigen Reibung u. ä.) in die Öffnungsstellung zu bewegen. Andererseits muss unter Umständen für die Bewegung von der Öffnungsstellung in die erweiterte Öffnungsstellung der Benutzer gegen die Wirkung der Öffnungsfeder arbeiten, womit vorteilhaft ist, wenn die Öffnungsfeder eine kleine Öffnungskraft erzeugt oder nicht sehr steif ausgebildet ist. Dieser Zielkonflikt kann bspw. gelöst werden, indem die Öffnungsfeder lediglich bis zum Erreichen der Öffnungsstellung mit der beweglichen Schneidbacke gekoppelt ist, während diese mit der Bewegung aus der Öffnungsstellung in Richtung der erweiterten Öffnungsstellung von der beweglichen Schneidbacke entkoppelt wird. Dies kann bspw. dadurch erfolgen, dass die Öffnungsfeder als Druckfeder lediglich an der beweglichen Schneidbacke anliegt und mit Erreichen der Öffnungsstellung zur Anlage an einen Anschlag kommt, so dass diese dann der beweglichen Schneidbacke nicht weiter folgen kann. Für eine erfindungsgemäße Lösung wirkt die Öffnungsfeder grundsätzlich auch für die Bewegung von der Öffnungsstellung in die erweiterte Öffnungsstellung auf die bewegliche Schneidbacke ein. Für einen Vorschlag der Erfindung wird aber mit Veränderung des Schwenkwinkels der beweglichen Schneidbacke in Richtung der erweiterten Öffnungsstellung das Moment, welches die Öffnungsfeder auf die bewegliche Schneidbacke ausübt, kleiner, womit die von dem Benutzer zu applizierenden Öffnungskräfte reduziert werden.

Die zuvor erläuterte Reduzierung des von der Öffnungsfeder auf die bewegliche Schneidbacke ausgeübten Moments kann auf vielfältige Weise herbeigeführt werden. Beispielsweise kann eine Öffnungsfeder eingesetzt werden, welche eine Nichtlinearität aufweist, die zu einer Reduktion des Moments führt, oder die Öffnungsfeder ist eine Zug- oder Druckfeder, deren Auslenkung von der Schließstellung in Richtung der Öffnungsstellung (und der erweiterten Öffnungsstellung) kleiner wird. Alternativ oder kumulativ schlägt die Erfindung gemäß einer Ausgestaltung vor, dass eine Reduktion des durch die Öffnungsfeder ausgeübten Moments dadurch erfolgt, dass ein Hebelarm, mit dem die Öffnungsfeder hinsichtlich des Schwenklagers auf die bewegliche Schneidbacke wirkt, mit Veränderung des Schwenkwinkels der beweglichen Schneidbacke in Richtung der Öffnungsstellung und/oder der erweiterten Öffnungsstellung kleiner wird.

Für den grundsätzlichen Aufbau des Bolzenschneiders gibt es vielfältige Möglichkeiten. In einer erfindungsgemäßen Ausgestaltung des Bolzenschneiders ist der Kopf desselben mit drei übereinander liegenden Platten gebildet, welche bspw. als Umformteile oder Pressteile, als Gussteile oder als Frästeile hergestellt sein können. Für eine derartige Platten-Bauweise bildet eine äußere Platte die feste Schneidbacke (und vorzugsweise auch den festen Handhebel). Die andere äußere Platte bildet eine Abdeckplatte, die vorzugsweise die beiden Schneiden nicht mit abdeckt und sich bspw. lediglich bis zu dem Schwenklager der beiden Schneidbacken erstreckt. Über die Abdeckplatte kann bspw. eine Abdeckung des Ratschengetriebes, eines etwaigen Kniehebeltriebs und weiterer Bauelemente wie Federn erfolgen. Möglich ist auch, dass an den beiden genannten äußeren Platten Bolzen wie Schwenkbolzen oder Bolzen oder Anschläge für Federfußpunkte von Federn abgestützt sind. Zwischen den beiden genannten äußeren Platten ist die dritte Platte angeordnet, die die bewegliche Schneidbacke bildet.

Für die Befestigung der Abdeckplatte an der anderen äußeren Platte gibt es vielfältige Möglichkeiten. Gemäß einem Vorschlag der Erfindung ist die Abdeckplatte ausschließlich unterhalb der beweglichen Schneidbacke, also auf der von der beweglichen Schneidbacke den Handhebeln zugewandten Seite, an der andern äußeren Platte befestigt. Somit kragt die Abdeckplatte von diesem Befestigungsbereich frei in Richtung der Aufnahme und den Schneiden aus. Da im Längsbereich der beweglichen Schneidbacke keine weiteren Befestigungen für die Abdeckplatte vorhanden sind, ergibt sich eine besonders kompakte Bauweise, ohne dass auf die Abdeckwirkung der Abdeckplatte in diesem Bereich verzichtet werden muss.

Für die grundsätzliche Ausgestaltung der Antriebskinematik des Bolzenschneiders gibt es vielfältige aus dem Stand der Technik bekannte Möglichkeiten, wobei in jedem Fall im Rahmen der Erfindung ein Ratschengetriebe Einsatz findet. Für eine besondere Ausgestaltung des Bolzenschneiders wird vorgeschlagen, dass der bewegliche Handhebel über ein Schwenklager verschwenkbar an dem festen Handhebel gelagert ist. Der bewegliche Handhebel weist ein Handhebelteil auf, welches sich von dem Schwenklager von dem beweglichen Handhebel weg erstreckt. Eine Schubstange ist über ein Schwenklager in dem Endbereich des Handhebelteils, welcher dem Schwenklager abgewandt ist, angelenkt. Die Schubstange weist in dem dem Schwenklager abgewandten Endbereich eine Ratschenverzahnung auf, bei welcher es sich auch nur um einen Eingriffszahn handeln kann. Diese Ratschenverzahnung ist in Eingriff bringbar mit einer entsprechenden Ratschenverzahnung der beweglichen Schneidbacke. Das Handhebelteil bildet dabei einen ersten Kniehebel. Die Schubstange bildet einen zweiten Kniehebel. Das Schwenklager zwischen dem Handhebelteil und der Schubstange bildet ein Kniegelenk. Das Handhebelteil, die Schubstange und das Kniegelenk bilden einen Kniehebeltrieb. Zusätzlich zu der genannten vorteilhaften Ratschenwirkung zur Herbeiführung einer kompakten Bauweise kann für diese Ausgestaltung der Erfindung eine weitere Optimierung der Kraft- und Bewegungsverhältnisse durch die erläuterte Nutzung eines Kniehebeltriebs erfolgen.

In weiterer Ausgestaltung der Erfindung wirkt eine Sperrklinke, die federbeaufschlagt ist, mit der Ratschenverzahnung der beweglichen Schneidbacke zusammen. Die Sperrklinke sperrt während des Schneidhubs durch Eingriff in die Ratschenverzahnung der beweglichen Schneidbacke eine Öffnung der Schneidbacken. Nach einem vollständigen Durchlaufen des Schneidhubs, einer Überführung der Handhebel von einer Öffnungsstellung in eine erweiterte Öffnungsstellung bei Ausgestaltung gemäß EP 15 191 264.9 und/oder einer manuellen Entsperrung der Sperrklinke erzeugt die Sperrklinke hingegen keine Sperrwirkung in der Ratschenverzahnung der beweglichen Schneidbacke. Infolge des Entfalls der Sperrwirkung ist dann eine Öffnung der beweglichen Schneidbacke durch die Öffnungsfeder in die Öffnungsstellung und/oder eine manuelle Öffnung der beweglichen Schneidbacke in die erweiterte Öffnungsstellung möglich.

Möglich ist, dass die feste und/oder bewegliche Schneidbacke unmittelbar ein Schneidmesser oder ein Abstützmesser ausbilden. In bevorzugter Ausgestaltung der Erfindung hält mindestens eine Schneidbacke lösbar ein Schneidmesser, so dass dieses bei Abnutzung ausgetauscht werden kann und/oder mit demselben Bolzenschneider Schneidmesser mit unterschiedlicher Schneidengeometrie und/oder Längskonturen der Schneidmesser und Geometrien der gebildeten Aufnahme eingesetzt werden können, um Werkstücke mit unterschiedlichen Geometrien und/oder Materialien durchtrennen zu können. Vorzugsweise sind an beiden Schneidbacken Schneidmesser lösbar gehalten.

Möglich ist, dass die Schneidmesser über eine Aufnahme oder Führung mit Rast- oder Verriegelungseinrichtung, eine Schraubverbindung u. ä. an der zugeordneten Schneidbacke gehalten sind. Für einen Vorschlag der Erfindung weist (mindestens) eine Schneidbacke eine Aufnahme auf, in die das Schneidmesser passgenau hinsichtlich zumindest eines Freiheitsgrads eingesetzt werden kann, womit hinsichtlich zumindest eines Freiheitsgrads die ordnungsgemäße Montage garantiert werden kann. Beispielsweise kann das Schneidmesser in der Projektion in die Kopfebene des Bolzenschneiders eine Außenkontur aufweisen, die passgenau in eine entsprechende Querschnittskontur der Aufnahme der Schneidbacke einsetzbar ist, wobei die Aufnahme eine (randgeschlossene oder randoffene) Ausnehmung mit der genannten Querschnittskontur ist, welche in eine Richtung vertikal zur Kopfebene in die Schneidbacke eingebracht ist, sodass sich die Querschnittskontur der Ausnehmung in der Kopfebene erstreckt. Mit dem passgenauen Einsetzen des Schneidmessers in die Aufnahme ist das Schneidmesser bereits passgenau in sämtliche Richtungen der Kopfebene fixiert. In eine erste Richtung vertikal zu der Kopfebene des Bolzenschneiders kann sich das Schneidmesser zusätzlich an dem Boden der Aufnahme abstützen. Es ist dann lediglich die Sicherung des Schneidmessers in die entgegengesetzte Richtung vertikal zur Kopfebene des Bolzenschneiders erforderlich, was bspw. durch eine Schraube erfolgen kann, welche mit ihrem Kopf das Schneidmesser in die Aufnahme presst.

Durchaus möglich ist, dass weitere Schneidmesser zum Ersatz eines defekten Schneidmessers des Bolzenschneiders oder für die Bearbeitung von Werkstücken mit anderen Geometrien oder Materialien separat von dem Benutzer des Bolzenschneiders mitgeführt werden. Gemäß einem weiteren Vorschlag der Erfindung weist der Bolzenschneider (bspw. im Bereich eines die feste Schneidbacke und den festen Handhebel ausbildenden Grundkörpers, einer äußeren Platte oder der Abdeckplatte) eine Aufnahme für weitere Austausch-Schneidmesser auf. Für die Befestigung der Austausch-Schneidmesser in der Aufnahme gibt es vielfältige Möglichkeiten. So kann bspw. das Austausch-Schneidmesser in einer entsprechenden die Aufnahme ausbildenden Halterung oder Ausnehmung verrastet, verriegelt oder anderweitig fixiert werden. Im einfachsten Fall ist die Aufnahme von einer Bohrung gebildet, über welche das Austausch-Schneidmesser mit dem Bolzenschneider verschraubt werden kann. Hierbei kann als Schraube sogar eine Schraube genutzt werden, mittels welcher dann das Schneidmesser auch für die Benutzung an der zugeordneten Schneidbacke befestigt werden kann.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Bolzenschneider in einer Vorderansicht.
- **Fig. 2**: zeigt den Bolzenschneider gemäß Fig. 1 in einer räumlichen Ansicht schräg von hinten.

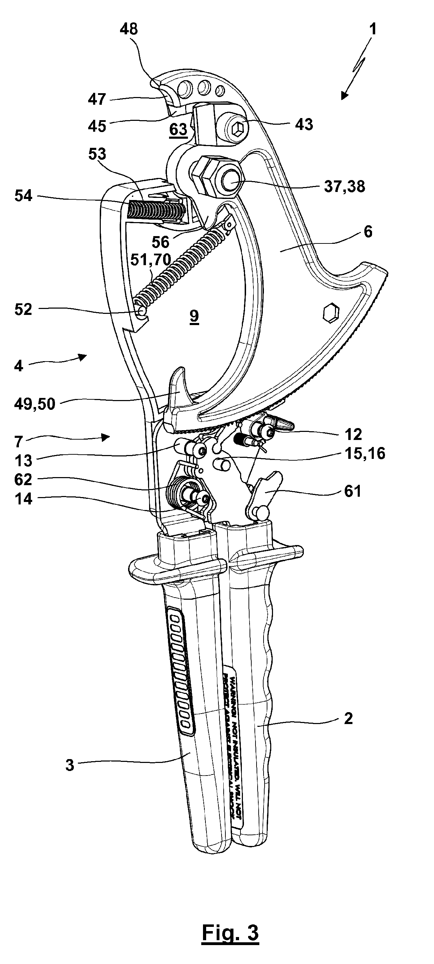

- **Fig. 3**: zeigt den Bolzenschneider gemäß Fig. 1 und 2 in einer Fig. 2 entsprechenden Ansicht, wobei hier eine feste Schneidbacke demontiert ist.

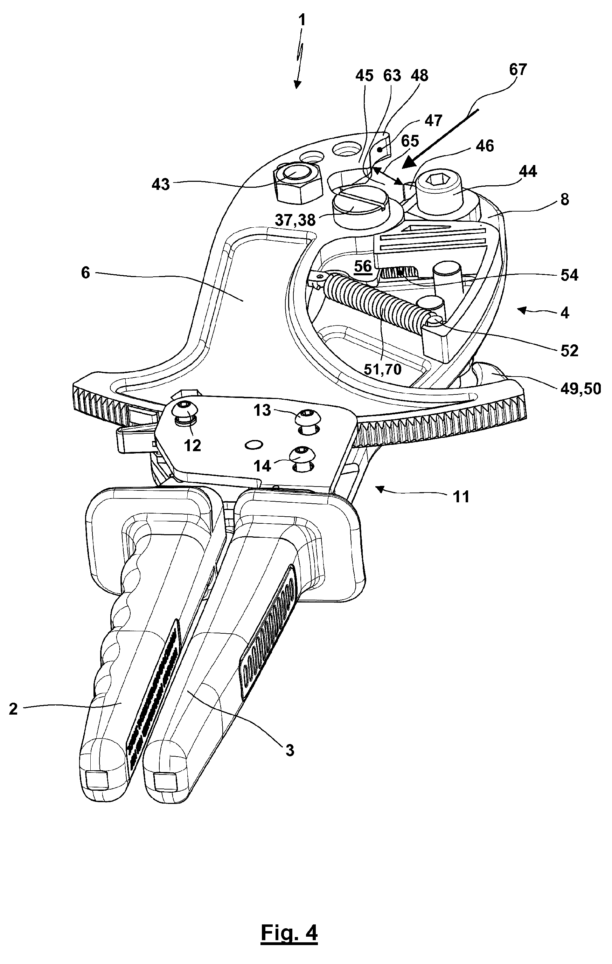

- **Fig. 4**: zeigt den Bolzenschneider gemäß Fig.1 bis 3 in einer räumlichen Ansicht schräg von unten, wobei eine Abdeckplatte teilweise weggeschnitten dargestellt ist.
- **Fig. 5**: ein Detail des Bolzenschneiders gemäß Fig.1 bis 4 von hinten in teildemontiertem Zustand im Bereich eines Ratschengetriebes mit einem Kniehebeltrieb.
- **Fig. 6 bis 10**: zeigen den Bolzenschneider gemäß Fig. 1 bis 5 in unterschiedlichen Betriebsstellungen, nämlich gemäß Fig. 6 in einer Öffnungsstellung der Schneidbacken, gemäß Fig. 7 in einer erweiterten Öffnungsstellung der Schneidbacken, gemäß Fig. 8 in der wieder hergestellten Öffnungsstellung nach Einlegen eines Werkstücks, gemäß Fig. 9 während des Schneidhubs mit einem beidseitigen Einschneiden des Werkstücks und gemäß Fig. 10 in der Schließstellung der Schneidbacken am Ende des Schneidhubs.

### FIGURENBESCHREIBUNG

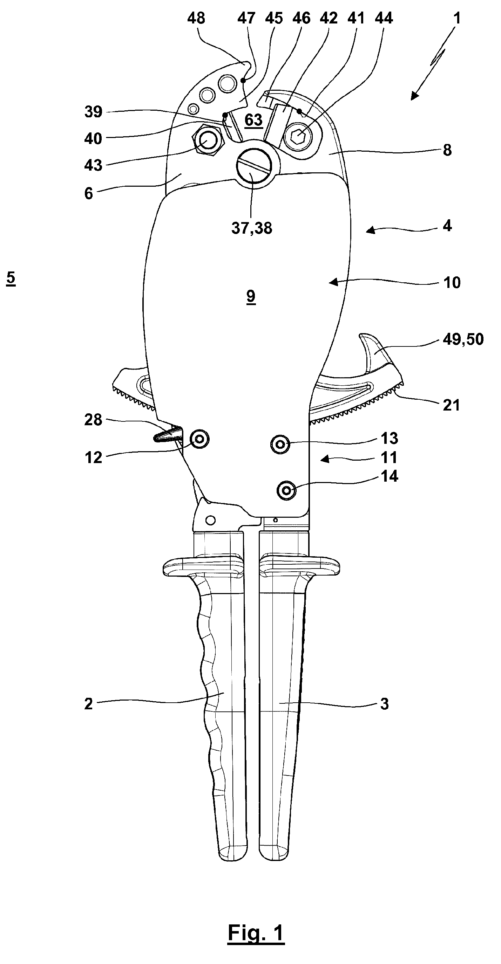

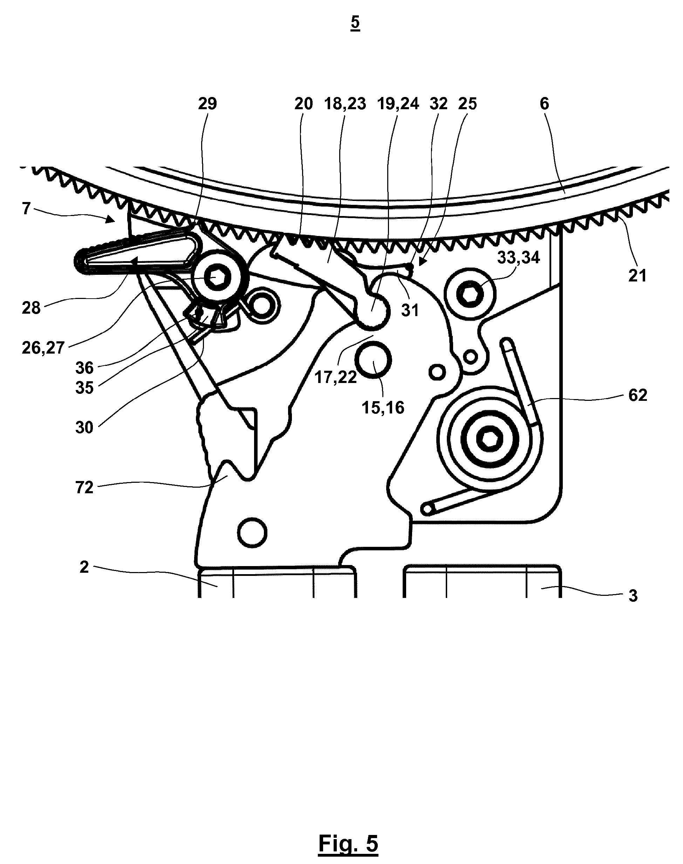

**Fig. 1** zeigt einen Bolzenschneider 1, welcher im Wesentlichen mit einem beweglichen Handhebel 2 und einem festen Handhebel 3 sowie einem Kopf 4 gebildet ist. Der Kopf 4 verfügt über eine Kopfebene 5, welche parallel zur Zeichenebene gemäß Fig. 1, 5 orientiert und in welcher der bewegliche Handhebel 2 verschwenkt wird und sich auch andere bewegte Bauelemente (wie eine bewegliche Schneidbacke 6, Federn und Bauelemente eines Ratschengetriebes 7) bewegen.

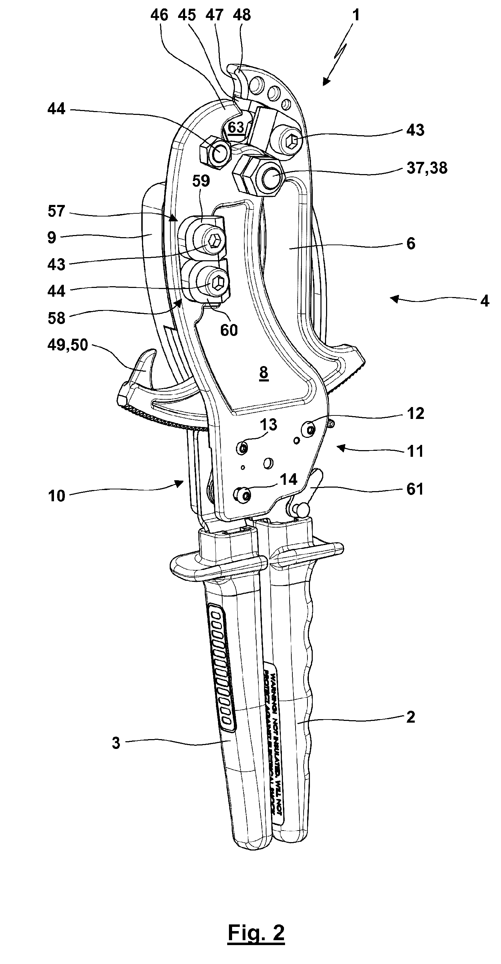

Wie am Besten in **Fig. 2** zu erkennen ist, bilden der feste Handhebel 3, eine feste Schneidbacke 8 und eine Abdeckplatte 9 einen starren Grundkörper 10 aus. Hierbei sind der feste Handhebel 3, die Abdeckplatte 9 und die feste Schneidbacke 8 im Bereich einer Überlappung 11 über quer zur Kopfebene 5 orientierte Querbolzen 12, 13, 14 fest miteinander verbunden. Von der Überlappung 11 kragen auf der den Handhebeln 2, 3 abgewandten Seite sowohl die Abdeckplatte 9 als auch die feste Schneidbacke 8 frei aus. Die Schneidbacke 8 und die Abdeckplatte 9 bilden eine Art Gehäuse für das Ratschengetriebe 7 und weitere Bauelemente des Bolzenschneiders 1, wobei dieses Gehäuse vertikal zur Kopfebene 5 geschlossen ist und in Querrichtung teilweise geöffnet ist, so dass die bewegliche Schneidbacke 6 in beide Querrichtungen aus diesem Gehäuse heraustreten kann. An dem Grundkörper 10 sind sämtliche weitere Bauelemente des Bolzenschneiders 1, insbesondere der bewegliche Handhebel 2 und das Ratschengetriebe 7, gelagert oder abgestützt. Während der feste Handhebel 3 und die Abdeckplatte 9 unmittelbar aneinander anliegen, ergibt sich zwischen diesen und der festen Schneidbacke 8 ein Zwischenraum, in welchem sich die bewegliche Schneidbacke 6, Bauelemente des Ratschengetriebes 7 und der bewegliche Handhebel 2 erstrecken.

Der bewegliche Handhebel 2 ist über ein Schwenklager 15, hier einen Querbolzen 16, verschwenkbar an dem Grundkörper 10 gelagert. Der bewegliche Handhebel 2 weist ein sich von dem Schwenklager 15 von einem Griffbereich des beweglichen Handhebels 2 weg erstreckendes Handhebelteil 17 auf. In dem Endbereich des Handhebelteils 17, welcher dem Schwenklager 15 abgewandt ist, ist an dem beweglichen Handhebel 2 eine Schubstange 18 in einem Schwenklager 19 angelenkt. Die Schubstange 18 weist in dem dem Schwenklager 19 abgewandten Endbereich eine Ratschenverzahnung 20 (bei welcher es sich auch nur um einen Ratschenzahn oder ein Eingriffselement handeln kann) auf. Diese Ratschenverzahnung 20 der Schubstange 18 ist in Eingriff bringbar mit einer entsprechenden Ratschenverzahnung 21 der beweglichen Schneidbacke 6.

Das Handhebelteil 17 bildet einen ersten Kniehebel 22. Die Schubstange 18 bildet einen zweiten Kniehebel 23. Das Schwenklager 19 bildet ein Kniegelenk 24. Somit bilden das Handhebelteil 17, die Schubstange 18 und das Schwenklager 19 einen Kniehebeltrieb 25.

An dem Grundkörper 10 ist des Weiteren über ein Schwenklager 26, hier einen Schwenkbolzen 27, eine Sperrklinke 28 verschwenkbar gelagert. Die Sperrklinke 28 weist eine Sperrverzahnung 29 (bei welcher es sich auch nur um einen Ratschenzahn oder ein Eingriffselement handeln kann) auf. Mit einer Feder 30, hier einer Schenkelfeder, wird die Sperrklinke 28 in Richtung der Sperrverzahnung 21 beaufschlagt, womit die Sperrverzahnung 29 der Sperrklinke 28 in die Ratschenverzahnung 21 der beweglichen Schneidbacke 6 eingreifen kann. Die Ratschenverzahnung 21, die Sperrklinke 28 und die Schubstange 18 bilden das Ratschengetriebe 7, was für das dargestellte Ausführungsbeispiel mit der Integration des Kniehebeltriebs 25 zum Antrieb der Schubstange 18 erfolgt.

Mittels einer Feder wird auch die Schubstange 18 in Richtung der Ratschenverzahnung 21 beaufschlagt, so dass während des normalen Schließhubs der Handhebel 2, 3 die Ratschenverzahnungen 20, 21 miteinander in Eingriff sind. Dieser Eingriff koppelt für die Schließbewegung die Bewegung der Schubstange 18 mit der Bewegung der Schneidbacke 6 zur Schließung derselben, während für eine Öffnungsbewegung der Handhebel 2, 3 die Schubstange 18 ratschenartig mit seiner Ratschenverzahnung 20 entlang der Ratschenverzahnung 21 gleiten kann.

Möglich ist, dass die Schubstange 18 einen Fortsatz 31 aufweist, welcher für die normale Bewegung zwischen der Öffnungsstellung und der Schließstellung der Handhebel 2, 3 keinerlei Funktion hat. Werden aber die Handhebel 2, 3 manuell in eine erweiterte Öffnungsstellung überführt, kommt der Fortsatz 31 mit einer Anschlagfläche 32 zur Anlage an einen am Grundkörper 10 gehaltenen Anschlag 33, hier einen Querbolzen 34. Die weitere Öffnung der Handhebel 2, 3 bis in die erweiterte Öffnungsstellung führt infolge der Abstützung der Schubstange 18 über die Anschlagfläche 32 an dem Anschlag 33 zu einer Verschwenkung der Schubstange 18 von der Ratschenverzahnung 21 weg, womit die Ratschenverzahnungen 20, 21 außer Eingriff kommen.

Die Sperrklinke 28 sperrt während des Schneidhubs insbesondere während der ratschenartigen Bewegung der Schubstange 18 relativ zu der Schneidbacke 6 eine Öffnungsbewegung der Schneidbacke 6, während für die Schließbewegung der Schneidbacke 6 über die Bewegung der Schubstange 18 die Sperrverzahnung 29 ratschenartig entlang der Ratschenverzahnung 21 gleitet.

Die Sperrklinke 28 verfügt über einen Vorsprung 35, der eine Anlagefläche 36 ausbildet. In der Öffnungsstellung der Handhebel 2, 3 kommt eine Nase 72 des Handhebels 2 zur Anlage an eine hinsichtlich des Schwenklagers 26 radial außenliegende Stirnseite des Vorsprungs 35, womit in der Öffnungsstellung eine Begrenzung der Öffnungsbewegung erfolgt. Wird in dieser Öffnungsstellung der Handhebel 2, 3 aber die Sperrklinke 28 entsperrt, in dem diese mit einem Finger des Benutzers von der Ratschenverzahnung 21 weg bewegt wird, kann die Nase 72 die Stirnseite des Vorsprungs 35 passieren. Es ist dann eine Bewegung des Handhebels 2 in eine erweiterte

Öffnungsstellung möglich, in welcher die Nase 72 den Vorsprung 35 hintergreift und zur Anlage an die Anlagefläche 36 kommt. In der erweiterten Öffnungsstellung der Handhebel 2, 3 wird auf diese Weise die Sperrklinke 28 in von der Ratschenverzahnung 21 weg verschwenkter Stellung fixiert. Mit einer Rückführung des Handhebels 2 von der erweiterten Öffnungsstellung in die Öffnungsstellung gleitet die Nase 72 entlang der Anlagefläche 36. Hat die Nase 72 vollständig die Anlagefläche 36 passiert, wird in der Öffnungsstellung die Sperrklinke 28 infolge der Feder 30 wieder in Richtung der Ratschenverzahnung 21 bewegt.

Hinsichtlich
- der automatischen Lösung der Schubstange 18 von der Ratschenverzahnung 21 infolge der Bewegung des Handhebels 2,
- der Begrenzung der Öffnungsbewegung des Handhebels mit dem Vorsprung 35 der Sperrklinke 28,
- der manuellen Entsperrung der Sperrklinke 28 und der Fixierung der Sperrklinke 28 in entsperrtem Zustand durch den Handhebel 2 in der erweiterten Öffnungsstellung und
- der automatischen Wiederherstellung der Sperrwirkung der Sperrklinke 28 mit der Bewegung des Handhebels 2 von der erweiterten Öffnungsstellung des Handhebels in die Öffnungsstellung des Handhebels 2 und/oder
- der Anordnung und Ausgestaltung der beteiligten Bauelemente
wird auf die nicht vorveröffentlichte europäische Patentanmeldung EP 15 191 264.9 verwiesen, welche diesbezüglich zur Offenbarung der vorliegenden Patentanmeldung gemacht wird.

Über ein Schwenklager 37, hier einen Schwenkbolzen 38, ist die Schneidbacke 6 beweglich an der Schneidbacke 8 gelagert. In dem den Handhebeln 2, 3 zugewandten Endbereich bildet die Schneidbacke 6 die Ratschenverzahnung 21 aus, welche sich konzentrisch zu dem Schwenklager 37 erstreckt, wobei sich die Ratschenverzahnung 21 ungefähr über einen Umfangswinkel von 60 bis 90° erstreckt. Auf der hinsichtlich des Schwenklagers 37 der Ratschenverzahnung 21 gegenüberliegenden Seite bildet die Schneidbacke 6 eine Aufnahme 39 für ein Schneidmesser 40 aus. In einer entsprechenden Aufnahme 41 ist ein Schneidmesser 42 der Schneidbacke 8 angeordnet. Die Schneidmesser 40, 42 sind über Befestigungsschrauben 43, 44, die in die zugeordneten Schneidbacken 6, 8 eingeschraubt sind, in den Aufnahmen 39, 41 gesichert und fixiert. Die Schneidmesser 40, 42 weisen geradlinige Schneidkanten auf. Die Schneidkanten der Schneidmesser 40, 42 sind in Vertiefungen oder Hinterschneidungen der Schneidbacken 6, 8 angeordnet, so dass die Schneidbacken 6, 8 gegenüber den Schneidkanten der Schneidmesser 40, 42 radial außenliegend hinsichtlich des Schwenklagers 37 gegenüber den Schneidkanten in Richtung der gegenüberliegenden Schneidbacke 8, 6 vorstehen, womit jeweils (hier integral) ein Sicherungselement 45, 46 von den Schneidbacken 6, 8 ausgebildet ist.

In dem hinsichtlich des Schwenklagers 37 außenliegend von dem Schneidmesser 40 angeordneten Endbereich bildet die Schneidbacke 6 eine Betätigungsfläche 47 aus. Diese ist radial innenliegend hinsichtlich des Schwenklagers 37 radial zu dem Schwenklager 37 orientiert und besitzt dann im Bereich eines Vorsprungs 48 eine Einführkrümmung.

Die bewegliche Schneidbacke 6 verfügt über ein Betätigungselement, inbesondere einen Vorsprung oder Haken 49, der eine Betätigungsfläche 50 ausbildet und im Bereich der Ratschenverzahnung 21 (in Umfangsrichtung hinsichtlich des Schwenklagers 37 endseitig) angeordnet ist.

Über eine Öffnungsfeder 51, insbesondere eine Zugfeder 71, wird die Schneidbacke 6 in Öffnungsrichtung beaufschlagt. Hierbei ist ein Federfußpunkt der Öffnungsfeder 51 an der Schneidbacke 6 angelenkt, während der andere Federfußpunkt der Öffnungsfeder 51 an dem Grundkörper 10, hier einem zumindest von der Schneidbacke 8 getragenen Querbolzen 52, angelenkt ist.

Die Abdeckplatte 9 bildet allein oder gemeinsam mit der Schneidbacke 8 eine Federkammer 53 aus, in welcher eine Abstützfeder 54 mit einem Federfußpunkt abgestützt und u. U. auch teilweise geführt ist. Der andere Federfußpunkt der Abstützfeder 54 bildet hier unmittelbar einen Anschlag 55 aus. Während der Bewegung der Schneidbacken 6, 8 liegt der von der Abstützfeder 54 ausgebildete Anschlag 55 an der Schneidbacke 6, hier einem Fortsatz 56 derselben, an, wobei mit zunehmender Bewegung in Öffnungsrichtung die Vorspannung der Abstützfeder 54 größer wird. Hingegen liegt in der Öffnungsstellung der Schneidbacken 6, 8 der Anschlag 55 an einem Anschlag des Grundkörpers 10, insbesondere der Schneidbacke 8 oder der Federkammer 53, unter verbleibender Vorspannung an, womit die maximale Länge der Abstützfeder 54 begrenzt ist. Demgemäß führt eine Schließbewegung der Schneidbacken 6, 8 von der Öffnungsstellung derselben in die Schließstellung dazu, dass sich die Schneidbacke 6 mit dem Fortsatz 56 unter Ausbildung eines zunehmenden Spiels 69 von dem Anschlag 55 weg bewegt.

In Fig. 2 ist zu erkennen, dass an dem Grundkörper 10, hier der Schneidbacke 8, Aufnahmen 57, 58 für Austausch-Schneidmesser 59, 60 vorgesehen sind, bei welchen es sich im einfachsten Fall um Gewindebohrungen handelt, mit welchen Befestigungsschrauben 43, 44 zum Befestigen der Austausch-Schneidmesser 59, 60 verschraubt werden können.

An dem Handhebel 2 ist benachbart dem Griff verschwenkbar ein Feststellhebel 61 gelagert, mit dessen manueller Betätigung die Handhebel 2, 3 in der Schließstellung arretiert werden können. Beispielsweise verfügt der Feststellhebel 61 über einen Fortsatz oder Querbolzen, der in der Schließstellung der Handhebel 2, 3 in eine Ausnehmung des Grundkörpers 10 so eintritt, dass die Öffnungsbewegung der Handhebel 2, 3 formschlüssig blockiert ist und erst möglich ist, wenn manuell (ggf. gegen die Beaufschlagung einer Feder) der Feststellhebel 61 betätigt wird.

Eine Öffnungsfeder 62 beaufschlagt die Handhebel 2, 3 so in Öffnungsrichtung, dass bei Reduzierung oder Beseitigung der auf die Handhebel 2, 3 aufgebrachten Betätigungskräfte die Handhebel 2, 3 automatisch die Öffnungsstellung einnehmen. In den Figuren ist die Anlenkung der Öffnungsfeder 62, welche hier als Schenkelfeder ausgebildet ist, einerseits an dem Grundkörper 10 und andererseits an dem beweglichen Handhebel 2 nicht im Detail dargestellt.

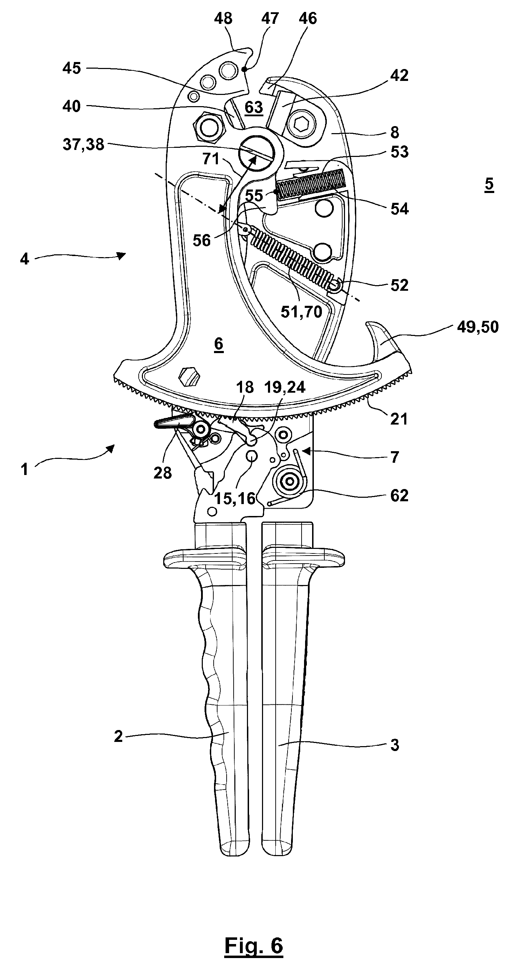

Die Funktionsweise des Bolzenschneiders 1 bei der Benutzung desselben wird im Folgenden anhand der Abfolge der **Fig. 6 bis 10** erläutert:

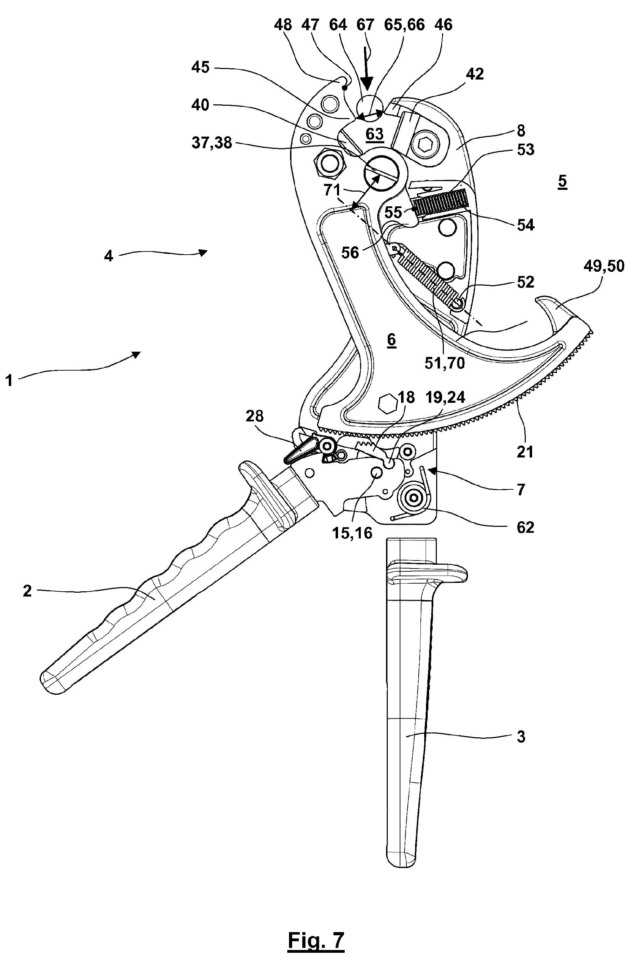

In **Fig. 6** befindet sich der Bolzenschneider 1 in der Öffnungsstellung der Schneidbacken 6, 8, während sich die Handhebel 2, 3 in ihrer Schließstellung befinden. Infolge des Eingriffs der Schubstange 18 und der Sperrklinke 28 mit deren Ratschenverzahnungen 20, 29 in die Ratschenverzahnung 21 der Schneidbacke 6 ist die Öffnungsstellung der Schneidbacken 6, 8 fixiert. Zum Einlegen eines Werkstücks in eine von den Schneidmessern 40, 42 gebildete Aufnahme 63 für das Werkstück werden (infolge der Wirkung der Öffnungsfeder 62 und/oder infolge der manuellen Bewegung der Handhebel 2, 3 die Handhebel 2, 3 in die Öffnungsstellung bewegt. Durch manuelle Betätigung der Sperrklinke 28 kann darüber hinaus die erweiterte Öffnungsstellung der Handhebel 2, 3 herbeigeführt werden, für welche wie zuvor erläutert und gemäß der europäischen Patentanmeldung EP 15 191 264.9 die Schubstange 18 und die Sperrklinke 28 nicht mehr in Eingriff mit der Sperrverzahnung 21 stehen **(****Fig. 7****).** Für derart entsperrte Schneidbacke 6 kann manuell die Schneidbacke 6 aus der Öffnungsstellung gemäß Fig. 6 in eine erweiterte Öffnungsstellung gemäß Fig. 7 bewegt werden. Dies kann erfolgen, indem der Benutzer mit seiner Hand unmittelbar auf die Schneidbacke 6 einwirkt, was bspw. durch Ziehen an der Betätigungsfläche 50 des Vorsprungs oder Hakens 49 erfolgen kann, der seitlich aus dem Kopf 4 heraussteht und somit zugänglich ist. Alternativ oder zusätzlich möglich ist, dass der Benutzer über ein Werkstück 64 die Bewegung der Schneidbacke 6 aus der Öffnungsstellung in die erweiterte Öffnungsstellung herbeiführt. Zu diesem Zweck kann der Benutzer das Werkstück 64 gegen die Betätigungsfläche 47 in Öffnungsrichtung der Schneidbacke 6 drücken, wobei mittels des Vorsprungs 48 und der dort angeordneten Krümmung der Betätigungsfläche 47 das Einführen vereinfacht sein kann. Es ergibt sich dann die erweiterte Öffnungsstellung der Schneidbacken 6, 8, wie diese in Fig. 7 dargestellt ist. Mit der Bewegung aus der Öffnungsstellung der Schneidbacken 6, 8 gemäß Fig. 6 in die erweiterte Öffnungsstellung der Schneidbacken 6, 8 gemäß Fig. 7 erfolgt die Beaufschlagung der Abstützfeder 54 durch Verschiebung des Anschlags 55 derselben durch die Schneidbacke 6 bzw. den Fortsatz 56. In der erweiterten Öffnungsstellung gemäß Fig. 7 bilden die Schneidbacken 6, 8 eine Einführöffnung 65 mit einem Einführquerschnitt 66. Der Einführquerschnitt 66 ist mindestens so groß wie der Außendurchmesser des Werkstücks 64, so dass das Werkstück 64 in eine Einführrichtung 67 durch die Einführöffnung 65 der Aufnahme 63 zugeführt werden kann. Hierbei ist die Einführöffnung 65 bzw. der Einführquerschnitt 66 begrenzt durch die Sicherungselemente 45, 46. Die Einführöffnung 65 geht infolge der Sicherungselemente 45, 46 mit einer Querschnittserweiterung in die Aufnahme 63 über.

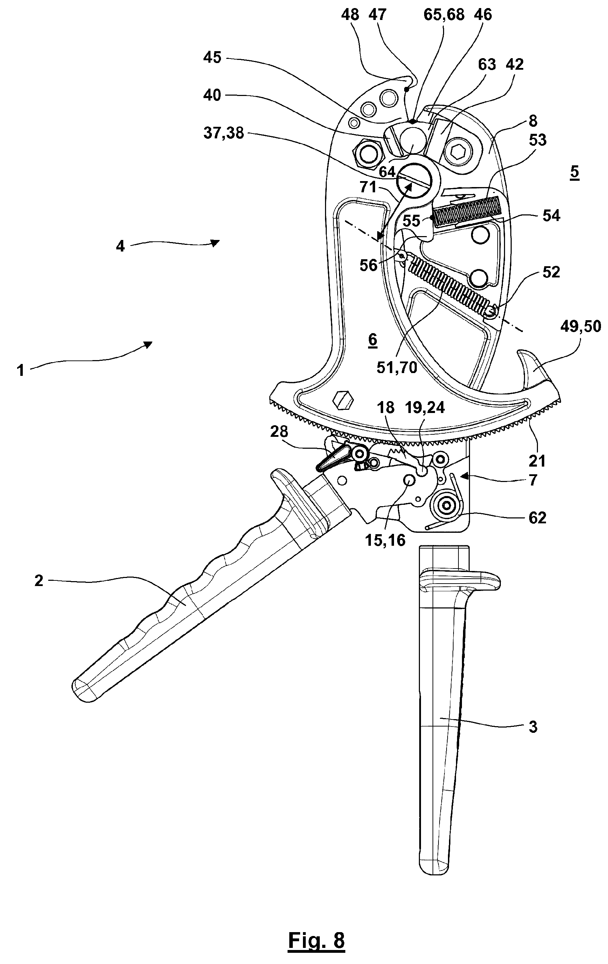

Wird die manuell auf die Schneidbacke 6 aufgebrachte Öffnungskraft beseitigt, kehrt die Schneidbacke 6 infolge der Wirkung der Abstützfeder 54 zurück in die Öffnungsstellung der Schneidbacken 6, 8 **(****Fig. 8****).** In der Öffnungsstellung der Schneidbacken 6, 8 hat die Einführöffnung 65 einen reduzierten Einführquerschnitt 68. Hierbei ist der Einführquerschnitt 68 so bemessen, dass das Werkstück 64 nicht über die Einführöffnung 65 aus der Aufnahme 63 austreten kann. Diese Öffnungsstellung der Schneidbacken 6, 8 ist durch die Abstützfeder 54 gesichert, ohne dass zwingend der Eingriff der Schubstange 18 und der Sperrklinke 28 in die Ratschenverzahnung 21 der Schneidbacke 6 erforderlich ist. Somit ist in der Öffnungsstellung der Schneidbacken 6, 8 das Werkstück 64 verliersicher in dem Bolzenschneider 1 gehalten und für den Schneidhub der Schneidbacken 6, 8 vorbereitet. Dies wird bewerkstelligt durch die Sicherungselemente 45, 46, hier in Form der über die Schneidkanten der Schneidmesser 40, 42 hervortretenden Vorsprünge der Schneidbacken 6, 8.

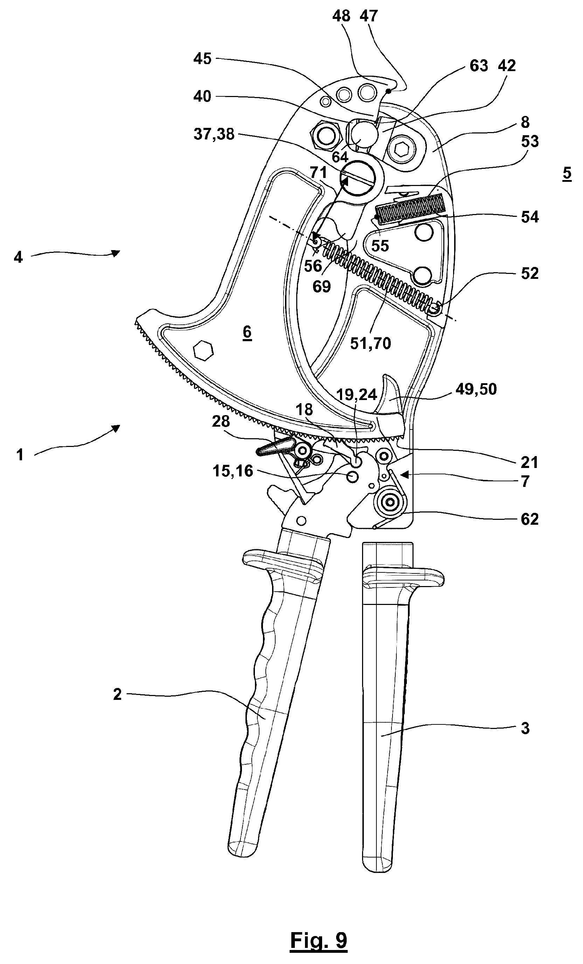

Vor der eigentlichen Schließbewegung der Schneidbacken 6, 8 infolge der sukzessiven Schließbewegungen der Handhebel 2, 3 ist zunächst das Ratschengetriebe zu aktivieren, was dadurch erfolgt, dass (wie zuvor erläutert und gemäß der Patentanmeldung EP 15 191 264.9) der Handhebel 2 von der erweiterten Öffnungsstellung in die Öffnungsstellung überführt wird. Fig. 9 zeigt den Bolzenschneider 1 während des Schneidhubs der Schneidbacken 6, 8 von der Öffnungsstellung derselben in die Schließstellung. Während des Schneidhubs werden die Handhebel 2, 3 in mehreren Schließhüben derselben von der Öffnungsstellung in die Schließstellung bewegt, womit mit jedem Schließhub der Handhebel 2, 3 über das Ratschengetriebe 7 ein Teilhub des Schneidhubs der Schneidbacken 6, 8 herbeigeführt wird. Zwischen den einzelnen Schließhüben der Handhebel 2, 3 findet eine Rückbewegung der Handhebel 2, 3 von der Schließstellung in die Öffnungsstellung statt, in welcher die erreichte Teilschließstellung der Schneidbacke 6 über die Sperrklinke 28 gesichert ist, während die Schubstange 18 ratschenartig entlang der Ratschenverzahnung 21 gleitet. Während des Schneidhubs der Schneidbacken 6, 8 folgt die Abstützfeder 54 der Bewegung der Schneidbacke 6 nicht, so dass zwischen dem von der Abstützfeder 54 gebildeten Anschlag 55 und dem Fortsatz 56 der Schneidbacke 6 ein sich mit zunehmender Schließung vergrößernder Zwischenraum 69 entsteht.

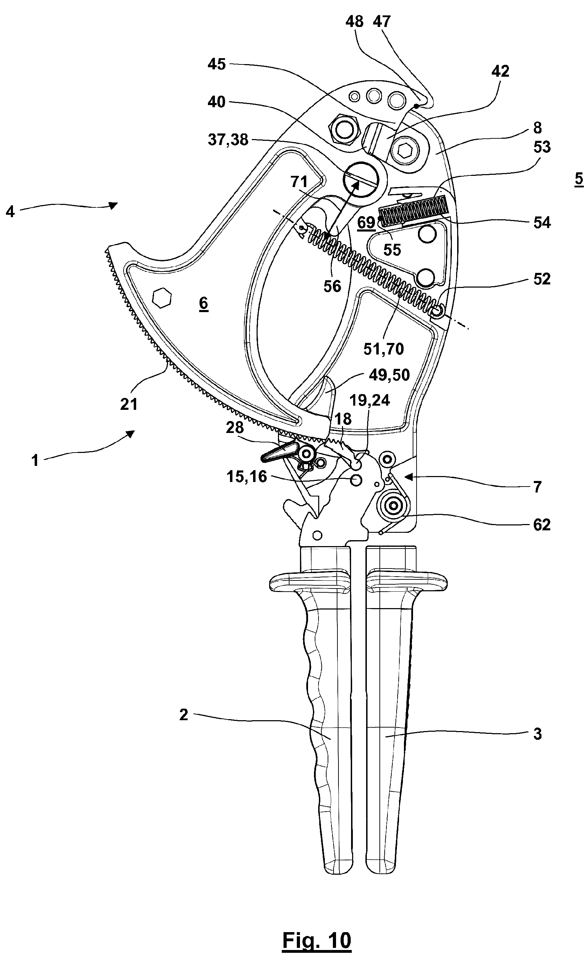

Am Ende des Schneidhubs der Schneidbacken 6, 8 (und des Schließhubs der Handhebel 2, 3) gemäß **Fig. 10** ist die Schneidbacke 6 maximal in Schließrichtung verschwenkt, womit die Schneidkanten der Schneidmesser 40, 42 aneinander anliegen und das Werkstück 64 vollständig durchtrennt ist. Diese Schließstellung korreliert, wie in Fig. 10 zu erkennen ist, damit, dass die Schubstange 18 das Ende der Ratschenverzahnung 21 erreicht hat, so dass mit einer weiteren Schließbewegung der Handhebel 2, 3 keine weitere Bewegung der Schneidbacke 6 bzw. eine Erhöhung der Schließkraft herbeigeführt werden kann.

Für das dargestellte Ausführungsbeispiel ist die Öffnungsfeder 51 von einer Zugfeder 70 ausgebildet. Die Beaufschlagung der Zugfeder 70 nimmt mit zunehmender Schließung der Schneidbacken 6, 8 zu. Die Zugfeder 70 wirkt mit einem Hebelarm 71 hinsichtlich des Schwenklagers 37 auf die Schneidbacke 6 ein. Dieser Hebelarm 71 wird mit zunehmender Schließung der Schneidbacken 6, 8 immer größer. Somit ergibt sich in der Öffnungsstellung der Schneidbacken 6, 8 eine von der Zugfeder 70 auf die Schneidbacke 6 ausgeübte Öffnungskraft, welche verhältnismäßig klein ist und somit an einer Abstützfeder 54 abgestützt werden kann, welche eine verhältnismäßig kleine Steifigkeit besitzen kann und/oder mit einer kleinen Vorspannung in der Öffnungsstellung abgestützt werden kann.

Die Überlappung 11, im Bereich welcher die Schneidbacke 8, der Handhebel 3 und die Abdeckplatte 9 aneinander befestigt sind, erstreckt sich hier ausschließlich auf der den Handhebeln 2, 3 zugewandten Seite von der Schneidbacke 6 und der Ratschenverzahnung 21. Die Abdeckplatte 9 endet vorzugsweise in Höhe des Schwenklagers 37 oder unterhalb desselben, so dass dieser für den gesamten Bewegungsbereich der beweglichen Schneidbacke 6 die Schneidmesser 40, 42, die Aufnahmen 39, 41 für dieselben und auch die Aufnahme 63 und die Sicherungselemente 45, 46 nicht abdeckt.

Vorzugsweise wir der erfindungsgemäße Bolzenschneider 1 mit einer modularen Fertigung hergestellt, wobei durch Nutzung unterschiedlicher Teilmodule unterschiedliche Bolzenschneider 1 oder auch andere Zangentypen hergestellt werden können. Um lediglich ein nicht beschränkendes Beispiels zu nennen, kann unter Nutzung derselben Handhebel 2, 3 und derselben Bauelemente des Ratschengetriebes eine Kombination mit sichelförmigen Schneidmessern erfolgen, bei denen dann eine sichelförmige bewegliche Schneidbacke die Ratschenverzahnung 21 ausbildet. Hinsichtlich weiterer Details zu einer derartigen modularen Ausgestaltung des Bolzenschneiders 1 und anderer Zangen wird auf die nicht vorveröffentlichte europäische Patentanmeldung EP 15 191 261.5-1701 verwiesen, welche hinsichtlich der modularen Gestaltung zum Gegenstand der vorliegenden Patentanmeldung gemacht wird.

Optional möglich ist, dass über eine hier nicht dargestellte Rast- oder Verriegelungseinrichtung eine Verrastung oder Verriegelung in der erweiterten Öffnungsstellung möglich ist.

### BEZUGSZEICHENLISTE

- 1: Bolzenschneider
- 2: beweglicher Handhebel
- 3: fester Handhebel
- 4: Kopf
- 5: Kopfebene
- 6: bewegliche Schneidbacke
- 7: Ratschengetriebe
- 8: feste Schneidbacke
- 9: Abdeckplatte
- 10: Grundkörper
- 11: Überlappung
- 12: Querbolzen
- 13: Querbolzen
- 14: Querbolzen
- 15: Schwenklager
- 16: Querbolzen
- 17: Handhebelteil
- 18: Schubstange
- 19: Schwenklager
- 20: Ratschenverzahnung
- 21: Ratschenverzahnung
- 22: erster Kniehebel
- 23: zweiter Kniehebel
- 24: Kniegelenk
- 25: Kniehebeltrieb
- 26: Schwenklager
- 27: Schwenkbolzen
- 28: Sperrklinke
- 29: Sperrverzahnung
- 30: Feder
- 31: Fortsatz
- 32: Anschlagfläche

- 33: Anschlag
- 34: Querbolzen
- 35: Vorsprung
- 36: Anlagefläche
- 37: Schwenklager
- 38: Schenkbolzen
- 39: Aufnahme
- 40: Schneidmesser
- 41: Aufnahme
- 42: Schneidmesser
- 43: Befestigungsschraube
- 44: Befestigungsschraube
- 45: Sicherungselement
- 46: Sicherungselement
- 47: Betätigungsfläche
- 48: Vorsprung
- 49: Haken
- 50: Betätigungsfläche
- 51: Öffnungsfeder
- 52: Querbolzen
- 53: Federkammer
- 54: Abstützfeder
- 55: Anschlag
- 56: Fortsatz
- 57: Aufnahme
- 58: Aufnahme
- 59: Austausch-Schneidmesser
- 60: Austausch-Schneidmesser
- 61: Feststellhebel
- 62: Öffnungsfeder
- 63: Aufnahme
- 64: Werkstück
- 65: Einführöffnung
- 66: Einführquerschnitt

- 67: Einführrichtung
- 68: Einführquerschnitt
- 69: Zwischenraum
- 70: Zugfeder
- 71: Hebelarm
- 72: Nase

## Patentansprüche

1. Bolzenschneider (1) zum Durchtrennen eines insbesondere bolzenartigen Werkstücks (64) mit
a) einem festen Handhebel (3) und einem beweglichen Handhebel (2),
b) einer festen Schneidbacke (8), welche starr mit dem festen Handhebel (3) verbunden ist, und
c) einer beweglichen Schneidbacke (6), welche
ca) über ein Schwenklager (37) verschwenkbar gegenüber der festen Schneidbacke (8) gelagert ist und
cb) über ein Ratschengetriebe (7) von dem beweglichen Handhebel (2) angetrieben ist,
d) wobei die bewegliche Schneidbacke (6) am Ende eines Schneidhubs über eine Öffnungsfeder (51) in eine Öffnungsstellung bewegbar ist,
**dadurch gekennzeichnet, dass**
e) die Öffnungsstellung dadurch vorgegeben ist, dass die bewegliche Schneidbacke (6) an einem durch eine Abstützfeder (54) abgestützten Anschlag (55) anliegt, und
f) die bewegliche Schneidbacke (6) durch manuelle Aufbringung einer Öffnungskraft von der Öffnungsstellung unter Beaufschlagung der Abstützfeder (54) in eine erweiterte Öffnungsstellung bewegbar ist und
g) die bewegliche Schneidbacke (6) bei Reduzierung oder Entfall der Öffnungskraft infolge der Abstützfeder (54) von der erweiterten Öffnungsstellung automatisch in die Öffnungsstellung zurückkehrt.

2. Bolzenschneider (1) nach Anspruch 1, **dadurch gekennzeichnet, dass** Schneidmesser (40, 42) der Schneidbacken (6, 8) eine Aufnahme (63) für das Werkstück (64) bilden, welche in der erweiterten Öffnungsstellung eine Einführöffnung (65) zum Einführen des Werkstücks (64) in eine Einführrichtung (67) in die Aufnahme (63) aufweist, und die bewegliche Schneidbacke (6) eine Betätigungsfläche (47) aufweist, die der Aufnahme (63) in Einführrichtung (67) vorgeordnet ist, so dass für ein Einführen eines Werkstücks (64) in die Aufnahme (63) die manuelle Öffnungskraft über das Werkstück (64) auf die Betätigungsfläche (47) der beweglichen Schneidbacke (6) aufgebracht werden kann.

3. Bolzenschneider (1) nach Anspruch 1 oder 2, **dadurch gekennzeichnet, dass** die bewegliche Schneidbacke (6) eine Betätigungsfläche (50) zur Aufbringung der manuellen Öffnungskraft aufweist, wobei die Betätigungsfläche (50) in der Öffnungsstellung lateral aus einem Kopf (4) des Bolzenschneiders (1) herausragt.

4. Bolzenschneider (1) nach Anspruch 3, **dadurch gekennzeichnet, dass** die Betätigungsfläche (50) von einem Betätigungselement, insbesondere Haken (49), ausgebildet ist, welches oder welcher in einem äußeren Endbereich einer Ratschenverzahnung (21) der beweglichen Schneidbacke (6), mit der das Ratschengetriebe (7) gebildet ist, angeordnet ist.

5. Bolzenschneider (1) nach einem der vorhergehenden Ansprüche, **dadurch gekennzeichnet, dass** zumindest eine Schneidbacke (6, 8) ein Sicherungselement (45, 46) aufweist, welches eine oder die in der Öffnungsstellung vorhandene Einführöffnung (65) zu der oder einer Aufnahme (63) für das Werkstück (64) in der Öffnungsstellung zumindest teilweise verschließt.

6. Bolzenschneider (1) nach einem der vorhergehenden Ansprüche, **dadurch gekennzeichnet, dass**
a) die Einführöffnung (65)
aa) in der Öffnungsstellung einen ersten Einführquerschnitt (68) aufweist und
ab) in der erweiterten Öffnungsstellung einen zweiten Einführquerschnitt (66) aufweist.
b) wobei
ba) der erste Einführquerschnitt (68) kleiner ist als der Querschnitt eines bestimmungsgemäßen Werkstücks (64) und
bb) der zweite Einführquerschnitt (66) zumindest so groß ist wie der Querschnitt des bestimmungsgemäßen Werkstücks (64).

7. Bolzenschneider (1) nach einem der vorhergehenden Ansprüche, **dadurch gekennzeichnet, dass** die Öffnungsfeder (51) ein Moment auf die bewegliche Schneidbacke (6) ausübt, welches mit Veränderung des Schwenkwinkel der beweglichen Schneidbacke (6) in Richtung der Öffnungsstellung und/oder der erweiterten Öffnungsstellung kleiner wird.

8. Bolzenschneider (1) nach Anspruch 7, **dadurch gekennzeichnet, dass** ein Hebelarm (71), mit welchem die Öffnungsfeder (51) hinsichtlich des Schwenklagers (37) auf die bewegliche Schneidbacke (6) wirkt, mit Veränderung des Schwenkwinkel der beweglichen Schneidbacke (6) in Richtung der Öffnungsstellung und/oder der erweiterten Öffnungsstellung kleiner wird.

9. Bolzenschneider (1) nach einem der vorhergehenden Ansprüche, **dadurch gekennzeichnet, dass** ein oder der Kopf (4) des Bolzenschneiders (1) mit drei übereinanderliegenden Platten gebildet ist, wobei
a) einer äußere Platte die feste Schneidbacke (8) bildet,
b) eine äußere Platte eine Abdeckplatte (9) bildet und
c) die zwischen den äußeren Platten (8, 9) angeordnete Platte die bewegliche Schneidbacke (6) bildet.

10. Bolzenschneider (1) nach Anspruch 9, **dadurch gekennzeichnet, dass** an der Abdeckplatte (9) ein Federfußpunkt der Abstützfeder (54) abgestützt ist, die Abdeckplatte (9) eine Abdeckung für das Ratschengetriebe (7) bildet und/oder die Abdeckplatte (9) ausschließlich unterhalb der beweglichen Schneidbacke (6) an der anderen äußeren Platte (8) befestigt ist.

11. Bolzenschneider (1) nach einem der vorhergehenden Ansprüche, **dadurch gekennzeichnet, dass**
a) der bewegliche Handhebel (2) über ein Schwenklager (15) verschwenkbar an dem festen Handhebel (3) gelagert ist,
b) der bewegliche Handhebel (2) ein sich von dem Schwenklager (15) weg erstreckendes Handhebelteil (17) aufweist,
c) an dem dem Schwenklager (15) abgewandten Endbereich des Handhebelteils (17) über ein Schwenklager (19) eine Schubstange (18) angelenkt ist,
d) die Schubstange (18) in dem dem Schwenklager (19) abgewandten Endbereich eine Ratschenverzahnung (20) aufweist, welche in Eingriff bringbar ist mit einer entsprechenden Ratschenverzahnung (21) der beweglichen Schneidbacke (6),
e) das Handhebelteil (17) einen ersten Kniehebel (22) bildet, die Schubstange (18) einen zweiten Kniehebel (23) bildet, das Schwenklager (19) zwischen dem Handhebelteil (17) und der Schubstange (18) ein Kniegelenk (24) bildet und das Handhebelteil (17), die Schubstange (18) und das Kniegelenk (24) einen Kniehebeltrieb (25) bilden.

12. Bolzenschneider (1) nach einem der vorhergehenden Ansprüche, **dadurch gekennzeichnet, dass** mit einer oder der Ratschenverzahnung (21) der beweglichen Schneidbacke (6) eine federbeaufschlagte Sperrklinke (28) zusammenwirkt, welche
a) während des Schneidhubs durch Eingriff in die Ratschenverzahnung (21) der beweglichen Schneidbacke (6) eine Öffnungsbewegung der Schneidbacken (6, 8) sperrt und
b) nach einem vollständigen Durchlaufen des Schneidhubs und/oder einer manuellen Entsperrung der Sperrklinge (28) keine Sperrwirkung an der Ratschenverzahnung (21) der beweglichen Schneidbacke (6) erzeugt, womit eine Öffnung der beweglichen Schneidbacke (6) durch die Öffnungsfeder (51) in die Öffnungsstellung und/oder eine manuelle Öffnung der beweglichen Schneidbacke (6) in die erweiterte Öffnungsstellung möglich ist.

13. Bolzenschneider (1) nach einem der vorhergehenden Ansprüche, **dadurch gekennzeichnet, dass** mindestens ein Schneidmesser (40, 42) lösbar an einer zugeordneten Schneidbacke (6, 8) befestigt werden kann oder befestigt ist.

14. Bolzenschneider (1) nach Anspruch 13, **dadurch gekennzeichnet, dass** mindestens eine Schneidbacke (6; 8) eine Aufnahme (39; 41) aufweist, in welche ein zugeordnetes Schneidmesser (40; 42) passgenau eingesetzt ist oder einsetzbar ist.

15. Bolzenschneider nach einem der vorhergehenden Ansprüche, **dadurch gekennzeichnet, dass** mindestens eine Aufnahme (57; 58) für ein Austausch-Schneidmesser (59; 60) vorgesehen ist.
